# EUROPÄISCHE PATENTSCHRIFT

(11) **EP 1 117 165 B1**
(45) Veröffentlichungstag und Bekanntmachung des Hinweises auf die Patenterteilung: **15.08.2007**
(21) Anmeldenummer: 00127397.8
(22) Anmeldetag: 14.12.2000
(51) Int. Cl.: H02G 5/00

(54) **Bausatz für ein Sammelschienensystem zum Verbinden der Stromsammelschiene mit den Anschlusskontakten eines elektrischen Installationsgerätes**
Construction kit for a busbar system which connects the busbars to the terminals of an installation apparatus
Jeu de construction de barres omnibus, pour connecter les barres aux bornes d'un appareil d'installation

(30) Priorität: 15.01.2000 DE 10001462
(43) Veröffentlichungstag der Anmeldung: 18.07.2001
(73) Patentinhaber: Rittal Rudolf Loh GmbH & Co. KG, 35745 Herborn (DE)
(72) Erfinder: Wagener, Hans, 35716 Dietzhölztal 2 (DE)
(74) Vertreter: Fleck, Hermann-Joseph

(56) Entgegenhaltungen:
- EP-A- 0 907 233
- DE-A- 19 625 866
- US-A- 5 941 654

## Beschreibung

Die Erfindung betrifft einen Bausatz für ein Sammelschienensystem zum Verbinden der Stromsammelschienen mit den Anschlusskontakten eines elektrischen Installationsgerätes, mit den Merkmalen des Oberbegriffes des Anspruchs 1. Ein Bausatz dieser Art ist aus EP-A-0 907 233 bekannt.

Zur Verbindung der Stromsammelschienen des Sammelschienensystems mit den Anschlusskontakten des Installationsgerätes werden im Schaltschrankbau aus Flachmaterial gebogene und/oder abgekantete Verbindungsschienen verwendet, die speziell an die Einbauorte dieser Teile anzupassen sind. Dabei kommt erschwerend hinzu, dass die Stromsammelschienen und die Anschlusskontakte des Installationsgerätes in senkrecht zueinander stehenden Ebenen angeordnet sind und je nach Einbaumöglichkeit im Schaltschrank mit ihren Ebenen horizontal und vertikal unterschiedlich zueinander versetzt sein können. Weitere Probleme ergeben sich dann, wenn über diese Verbindungen besonders hohe Ströme übertragen werden müssen. Dies erfordert große Querschnitte der Verbindungsschienen, die oft erst am Einsatzort des Schaltschrankes nach dem Einbau der Stromsammelschienen und der Installationsgeräte auf die Einbausituation angepasst werden können.

Es ist Aufgabe der Erfindung, einen Bausatz für ein Sammelschienensystem der eingangs erwähnten Art zu schaffen, mit dem selbst für hohe Ströme verwendbare Verbindungsschienen zusammengesetzt werden können, die an unterschiedliche Stromstärken und verschiedene Einbausituationen angepasst werden können.

Diese Aufgabe wird nach der Erfindung durch die Merkmale des Anspruchs 1 gelöst.

Die Verbindung kann dabei je nach Stromstärke mit einem oder mehreren Verbindungswinkeln, Flachschienenabschnitten und/oder Z-förmige Anschlusswinkeln hergestellt werden. Es ist daher eine Ausgestaltung von Vorteil, die dadurch gekennzeichnet ist, dass der Bausatz die gleiche Anzahl Verbindungswinkel, Flachschienenabschnitte und Z-förmige Anschlusswinkel umfasst.

Mit den Verbindungswinkeln, den Flachschienenabschnitten und den Z-förmigen Anschlusswinkeln können die Einbauebenen der Stromsammelschienen und der Anschlusskontakte des lnstallationsgerätes ohne speziell herstellbare Verbindungsschienen für die Verbindungen berücksichtigt werden. Dabei liegt es durchaus im Rahmen der Erfindung, unterschiedlich lange Flachschienenabschnitte und/oder Z-förmige Anschlusswinkel mit unterschiedlich langem Mittelschenkel bereit zu stellen.

Diese Varianten sind insbesondere dann einsetzbar, wenn für ein Mehrphasen-Sammelschienensystem vorzusehen ist, dass die Verbindungswinkel für ein Sammelschienensystem mit mehreren beabstandeten Stromsammelschienen unterschiedlich lange, auf den Abstand der Stromsammelschienen angepaßte Verbindungsschenkel mit den Stromsammelschienen zugeordneten Verbindungsbohrungen aufweisen. Der Vorrat an unterschiedlichen Verbindungswinkeln des Bausatzes lässt sich dadurch vermeiden, dass für ein Sammelschienensystem mit mehreren beabstandeten Stromsammelschienen für den Anschluss jeder Stromsammelschiene einheitliche Verbindungswinkel verwendet sind, deren Verbindungsschenkel sich quer über alle Stromsammelschienen erstrecken und im Bereich jeder Stromsammelschiene mit zugeordneten Verbindungsbohrungen versehen sind. Dann wird jedoch zusätzlich erforderlich, dass die Verbindungsschenkel eines Verbindungswinkel-Satzes über lsolationsstücke mit der zugeordneten Stromsammelschiene verbindbar ist, die nur im Bereich der zugeordneten Stromsammelschiene einen Kontaktbügel aufnehmen, der die elektrische Verbindung zwischen Stromsammelschiene und Verbindungswinkel-Satz herstellt.

Die einzelnen Teile einer Verbindung zwischen einer Stromsammelschiene und einem Anschlusskontakt des Installationsgerätes lassen sich dadurch einfach miteinander verbinden, dass die Anschlussschenkel der Verbindungswinkel-Sätze, der Flachschienenabschnitte und die Anschlussschenkel der Anschlusswinkel-Sätze mit aufeinander abgestimmten Befestigungsbohrungen versehen sind.

Ist nach einer Ausgestaltung vorgesehen, dass die Anschlusswinkel-Sätze einheitliche Z-förmige Anschlusswinkel aufweisen, deren Mittelschenkel mit zusätzlichen Verbindungsaufnahmen zur Festlegung des Anschlusswinkel-Satzes in der Einbaustellung versehen sind, dann können die für eine Verbindung ausgewählten Z-förmigen Anschlusswinkel zu einem festen Anschlusswinkel-Satz verbunden werden, in dem die Anschlussschenkel ihre definierte Stellung einhalten.

Weist das Installationsgerät einen Anschlussflachkontakt auf, dann kann dieser dadurch mit gutem elektrischem Kontakt mit den beabstandeten Anschlussschenkeln eines Verbindungswinkel-Satzes oder eines Anschlusswinkel-Satzes verbunden werden, dass für nicht belegte Abstände der Anschlussschenkel des Anschlusswinkel-Satzes Kontaktplatten vorgesehen sind, deren Dicke der Dicke des Flachmaterials entspricht und die mit den Anschlussschenkeln verbindbar sind. Der Anschlussflachkontakt des Installationsgerätes steht dann mit allen Anschlussschenkeln in flächigem Kontakt.

Die Erfindung wird anhand eines in den Zeichnungen dargestellten Ausführungsbeispiels näher erläutert. Es zeigen:
- Fig. 1: in Seitenansicht drei Verbindungswinkel-Sätze mit jeweils drei Verbindungswinkeln, jedoch unterschiedlich langer Verbindungsschenkel,
- Fig. 2: in Seitenansicht einen Flachschienen-Satz mit drei Flachschienenabschnitten,
- Fig. 3: in Seitenansicht einen Anschlusswinkel-Satz mit drei Z-förmigen Anschlusswinkeln und
- Fig. 4: eine Einbausituation der Stromsammelschienen in einem Schaltschrank.

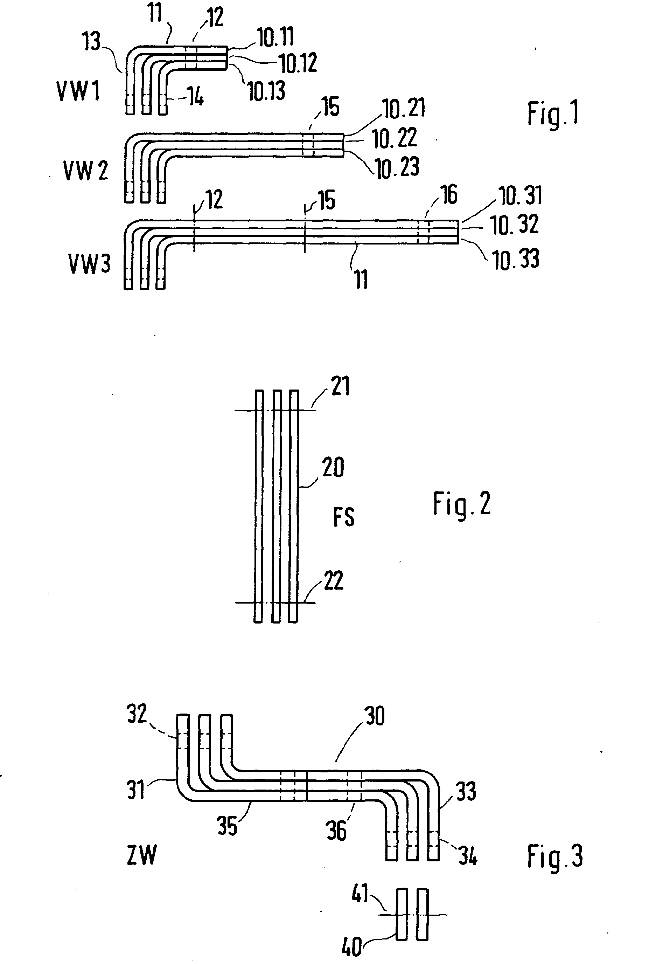

Wie die Fig. 1 bis 3 erkennen lassen, sind alle Verbindungsteile aus einem Flachmaterial mit einheitlichem Querschnitt hergestellt. Dabei können je nach zu übertragender maximaler Stromstärke eine mehr oder weniger große Anzahl von Einzelteilen verwendet werden. Anhand des Ausführungsbeispiels wird die Erfindung mit jeweils drei zusammengefassten Einzelteilen erläutert, die dann als Einzelteil-Sätze bezeichnet werden.

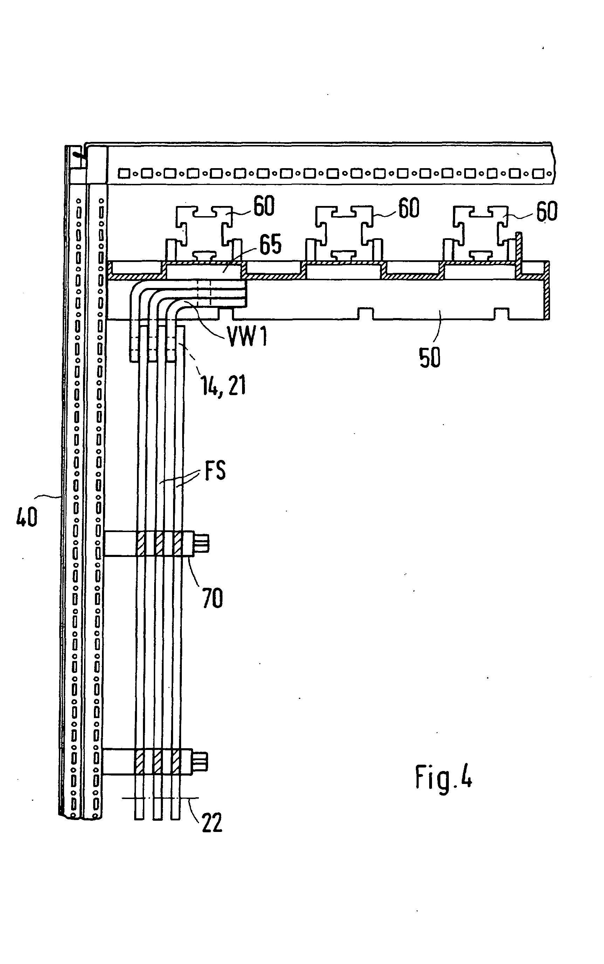

Sind, wie Fig. 4 zeigt, in einem Schaltschrank mit einem Rahmengestell 40 drei Stromsammelschienen 60 eines Drehstrom-Sammelschienensystems in einer horizontalen Ebene angeordnet, dann können die in Fig. 1 gezeigten Verbindungswinkel-Sätze VW1, VW2 und VW3 zum Anschluss der zugeordneten Stromsammelschiene 60 verwendet werden. Dabei sind die Verbindungsschenkel 11 der Verbindungswinkel 10.11, 10.12 und 10.13, wie Fig. 4 zeigt, so lang, dass sie über die Befestigungsbohrungen 12 mit der linken Stromsammelschiene 60 verbunden werden können. Beim Verbindungswinkel-Satz VW2 sind die Verbindungsschenkel 11 der Verbindungswinkel 10.21, 10.22 und 10.23 so lang, dass sie über ihre Befestigungsbohrungen 15 mit der mittleren Stromsammelschiene 60 nach Fig. 4 verbunden werden können. Schließlich können beim Verbindungswinkel-Satz VW3 die Verbindungswinkel 10.31, 10.32 und 10.33 bis zur rechten Stromsammelschiene 60 nach Fig. 4 geführt und über ihre Befestigungsbohrungen 16 mit dieser verbunden werden. Wie Fig. 4 zeigt, wird dazu jeweils ein Kontaktstück 65 zur Stromsammelschiene 60 verwendet, das in einem Isolationsstück 50 eingesetzt ist. Damit lassen sich die Verbindungsschenkel 11 der Verbindungswinkel-Sätze VW2 und VW3 ohne Kontakt mit den nicht anzuschließenden Stromsammelschienen über diese führen.

Der Verbindungswinkel-Satz VW3 kann auch zum Anschluss aller drei Stromsammelschienen 60 verwendet werden, wenn deren Verbindungsschenkel 1 mit Befestigungsbohrungen 12, 15 und 16 versehen sind. Die lsolationsstücke 50 erstrecken sich quer über alle Stromsammelschienen 60 und weisen im Bereich jeder Stromsammelschiene 60 eine Aufnahme für das Kontaktstück 65 auf. Mit drei Verbindungswinkel-Sätzen VW3 lassen sich die Anschlussschenkel 13 aller Verbindungswinkel 10.31, 10.32 und 10.33 in eine vertikale Ebene ausrichten. Wie Fig. 1 zeigt, stehen die einzelnen Anschlussschenkel 13 in den Verbindungswinkel-Sätzen VW1 bis VW3 in vorgegebenem Abstand, der der Dicke des verwendeten Flachmaterials entspricht, so dass die Flachschienenabschnitte 20 nach Fig. 2 und/oder Anschlussschenkel 31 des Anschlusswinkel-Satzes ZW nach Fig. 3 ineinander verschachtelt miteinander verbunden werden können.

Die Anschlussschenkel 13 der Verbindungswinkel-Sätze VW1, VW2 und VW3, die Endabschnitte der Flachschienenabschnitte 20 des Flachschienen-Satzes FS und die Anschlussschenkel 31 und 33 des Anschlusswinkel-Satzes ZW sind mit Befestigungsbohrungen 14, 21, 22, 32 und 34 versehen, die aufeinander abgestimmt sind und vorzugsweise den Befestigungsbohrungen des anzuschließenden Installationsgerätes in Anzahl und Anordnung entsprechen.

Die Verbindungswinkel-Sätze VW1, VW2 und VW3 können nicht nur zum Anschluss der Stromsammelschienen 60 verwendet werden, sie können auch in gleicher oder anderer Ausrichtung in die Verbindung zum Installationsgerät einbezogen werden. Die Verbindung kann auch ohne Flachschienen-Satz FS oder mit einem Flachschienen-Satz FS, bei dem die Flachschienenabschnitte 20 kürzer oder länger sind, erfolgen. Dasselbe gilt auch für den Anschlusswinkel-Satz ZW im Bezug auf den Mittelschenkel 35 der Z-förmigen Anschlusswinkel 30.

Wie Fig. 3 zeigt, sind zusätzlich Kontaktplatten 40 mit Befestigungsbohrungen 41 erforderlich, wenn das Installationsgerät einen als Anschlussflachkontakte ausgebildete Anschlusskontakte aufweist. Die Zwischenräume zwischen den Anschlussschenkeln werden mit derartigen Kontaktplatten 40 ausgefüllt, wenn der Anschlussflachkontakt des Installationsgerätes flächig mit allen Anschlussschenkeln des zugekehrten Satzes VW, FS oder ZW in Verbindung gebracht werden soll.

Bei dem Ausführungsbeispiel nach Fig. 4 sind die Stromsammelschienen 60 unterhalb der Deckwand des Schaltschrankes angeordnet, wobei sie parallel zur Rückseite des Schaltschrankes verlaufen und im der Rückwand zugekehrten Bereich anschließen und zur Vorderseiet des Schaltschrankes hin beabstandet sind. Die Anschlussschenkel der Verbindungswinkel-Sätze VW1 bis VW3 bzw. 3 x VW3 stehen in kleinem Abstand zur Rückwand und werden über den Flachschienen-Satz FS nach unten verlängert, wobei über die Befestigungsbohrungen 14 und 21 die verschachtelte Verbindung hergestellt wird. Die Flachschienenabschnitte 20 können dabei über zusätzliche Abstandshalter 70 auf Abstand gehalten werden.

Das untere Ende der Flachschienenabschnitte 20 mit den Befestigungsbohrungen 22 kann direkt mit einem Anschlusskontakt des Installationsgerätes verbunden werden. Die Verbindung zum Anschlusskontakt des lnstallationsgerätes kann jedoch auch über einen Verbindungswinkel-Satz VW1, VW2 oder VW3 und/oder über einen Anschlusswinkel-Satz ZW weitergeführt werden.

## Patentansprüche

1. Bausatz für ein Sammelschienensystem zum Verbinden der Stromsammelschienen mit Anschlusskontakten eines elektrischen Installationsgerätes, mit den Merkmalen:
dass er aus Flachmaterial gleichen Querschnitts hergestellte Verbindungswinkel (10.11, 10.12, 10.13 bzw. 10.21, 10.22, 10.23 bzw. 10.31, 10.32, 10.33), umfasst,
dass die Verbindungswinkel mit der Stromsammelschiene (60) verbindbare Verbindungsschenkel (11) und Anschlussschenkel (13) aufweisen, **dadurch gekennzeichnet, dass** der Bausatz Flachschienenabschnitte (20) und Z-förmige Anschlussschenkel (30) umfasst dass in der Einbaustellung der Verbindungswinkel-Sätze (VW1, VW2, VW3) die Verbindungsschenkel (11) aufeinander liegen und die Anschlusschenkel (13) einen Abstand zueinander aufweisen, der der Dicke des Flachmaterials entspricht, und
dass die Z-förmigen Anschluswinkel (30) mit Anschlussschenkel (31 oder 33) versehen sind, welche in der Einbaustellung der Anschlusswinkel-Sätze (ZW) einen Abstand zueinander aufweisen, der der Dicke des Flachmaterials entspricht.

2. Bausatz nach Anspruch 1,
**dadurch gekennzeichnet,**
**dass** er die gleiche Anzahl Verbindungswinkel (10), Flachschienenabschnitte (20) und Z-förmige Anschlusswinkel (ZW) umfasst.

3. Bausatz nach Anspruch 1 oder 2,
**dadurch gekennzeichnet,**
**dass** die Verbindungswinkel (10.11, 10.12, 10.13 bzw. 10.21, 10.22, 10.23 bzw. 10.31, 10.32, 10.33) für ein Sammelschienensystem mit mehreren beabstandeten Stromsammelschienen (60) unterschiedlich lange, auf den Abstand der Stromsammelschienen (60) angepaßte Verbindungsschenkel (11) mit den Stromsammelschienen (60) zugeordneten Verbindungsbohrungen (12 bzw. 15 bzw. 16) aufweisen.

4. Bausatz nach Anspruch 1 oder 2,
**dadurch gekennzeichnet,**
**dass** für ein Sammelschienensystem mit mehreren beabstandeten Stromsammelschienen (60) für den Anschluss jeder Stromsammelschiene (60) einheitliche Verbindungswinkel (10.31, 10.32, 10.33) verwendet sind, deren Verbindungsschenkel (11) sich quer über alle Stromsammelschienen (60) erstrecken und im Bereich jeder Stromsammelschiene (60) mit zugeordneten Verbindungsbohrungen (12, 15, 16) versehen sind.

5. Bausatz nach einem der Ansprüche 1 bis 4,
**dadurch gekennzeichnet,**
**dass** die Anschlussschenkel (13) der Verbindungswinkel-Sätze (VW1, VW2, VW3), der Flachschienenabschnitte (20) und die Anschlussschenkel (31, 33) der Anschlusswinkel-Sätze (W) mit aufeinander abgestimmten Befestigungsbohrungen (14, 21, 22, 32, 34) versehen sind.

6. Bausatz nach einem der Ansprüche 1 bis 5,
**dadurch gekennzeichnet,**
**dass** die Anschlusswinkel-Sätze (ZW) einheitliche Z-förmige Anschlusswinkel (30) aufweisen, deren Mittelschenkel (35) mit zusätzlichen Verbindungsaufnahmen (36) zur Festlegung des Anschlusswinkel-Satzes (ZW) in der Einbaustellung versehen sind.

7. Bausatz nach einem der Ansprüche 1 bis 6,
**dadurch gekennzeichnet,**
**dass** für nicht belegte Abstände der Anschlussschenkel (13) des Anschlusswinkel-Satzes (ZW) Kontaktplatten (40) vorgesehen sind, deren Dicke der Dicke des Flachmaterials entspricht und die mit den Anschlussschenkeln (z.B. 33) verbindbar (41) sind.

8. Bausatz nach Anspruch 4,
**dadurch gekennzeichnet,**
**dass** die Verbindungsschenkel (11) eines Verbindungswinkel-Satzes (VW3) über lsolationsstücke (50) mit der zugeordneten Stromsammelschiene (60) verbindbar ist, die nur im Bereich der zugeordneten Stromsammelschiene einen Kontaktbügel (65) aufnehmen, der die elektrische Verbindung zwischen Stromsammelschiene (60) und Verbindungswinkel-Satz (VW3) herstellt.

9. Bausatz nach einem der Ansprüche 1 bis 8,
**dadurch gekennzeichnet,**
**dass** er Flachschienen-Sätze (FS) mit Flachschienenabschnitte (20) unterschiedlicher Länge umfasst.

10. Bausatz nach einem der Ansprüche 1 bis 9,
**dadurch gekennzeichnet,**
**dass** er Anschlusswinkel-Sätze (ZW) mit Z-förmigen Anschlusswinkeln (30) umfasst, deren Mittelschenkel (35) unterschiedliche Abmessungen aufweisen.

## Claims

1. Structural assembly for a bus-bar system for connecting the current-collecting bars to connection contacts of an electrical installation appliance, having the features:
that it includes connecting brackets (10.11, 10.12, 10.13 or respectively 10.21, 10.22, 10.23 or respectively 10.31, 10.32, 10.33), produced from flat material of the same cross- section,
that the connecting brackets have connecting links (11) and connection links (13), which are connectable to the current-collecting bar (60),
**characterised in that** the structural assembly includes flat bar portions (20) and Z-shaped connection brackets (30), **in that**, in the installation position of the sets of connecting brackets (VW1, VW2, VW3), the connecting links (11) lie on one another, and the connection links (13) have a spacing from one another which corresponds to the thickness of the flat material, and **in that** the Z-shaped connection brackets (30) are provided with connection links (31 or 33) which, in the installation position of the sets of connection brackets (ZW), have a spacing from one another which corresponds to the thickness of the flat material.

2. Structural assembly according to claim 1, **characterised in that** it includes the same number of connecting brackets (10), flat bar portions (20) and Z-shaped connection brackets (ZW).

3. Structural assembly according to claim 1 or 2, **characterised in that** the connecting brackets (10.11, 10.12, 10.13 or respectively 10.21, 10.22, 10.23 or respectively 10.31, 10.32, 10.33), for a bus-bar system with a plurality of spaced-apart current-collecting bars (60), have variably long connecting links (11), which are adapted to the spacing between the current-collecting bars (60) and are provided with connecting bores (12 or respectively 15 or respectively 16) associated with the current-collecting bars (60).

4. Structural assembly according to claim 1 or 2, **characterised in that**, for a bus-bar system having a plurality of spaced-apart current-collecting bars (60), uniform connecting brackets (10.31, 10.32, 10.33) are used for the connection of each current-collecting bar (60), the connecting links (11) of which brackets extend transversely over all of the current-collecting bars (60) and are provided with associated connecting bores (12, 15, 16) in the region of each current-collecting bar (60).

5. Structural assembly according to one of claims 1 to 4, **characterised in that** the connection links (13) of the sets of connecting brackets (VW1, VW2, VW3) and of the flat bar portions (20) and the connection links (31, 33) of the sets of connection links (W) are provided with mounting bores (14, 21, 22, 32, 34) which are adapted to one another.

6. Structural assembly according to one of claims 1 to 5, **characterised in that** the sets of connection brackets (ZW) have uniform Z-shaped connection brackets (30), the central links (35) of which are provided with additional connecting receivers (36) for securing the set of connection brackets (ZW) in the installation position.

7. Structural assembly according to one of claims 1 to 6, **characterised in that** contact plates (40) are provided for spacings between the connection links (13) of the set of connection brackets (ZW) which are not occupied, the thickness of which contact plates corresponds to the thickness of the flat material, and which plates are connectable (41) to the connection links (e.g. 33).

8. Structural assembly according to claim 4, **characterised in that** the connecting links (11) of one set of connecting brackets (VW3) are connectable to the associated current-collecting bar (60) via insulating members (50) which, only in the region of the associated current-collecting bar, accommodate a contact bridge-piece (65), which establishes the electrical connection between the current-collecting bar (60) and the set of connecting brackets (VW3).

9. Structural assembly according to one of claims 1 to 8, **characterised in that** it includes sets of flat bars (FS) with flat bar portions (20) of variable length.

10. Structural assembly according to one of claims 1 to 9, **characterised in that** it includes sets of connection brackets (ZW) with Z-shaped connection brackets (30), the central links (35) of which have variable dimensions.

## Revendications

1. Jeu de construction pour un système de barres omnibus servant à raccorder les barres omnibus à des contacts de connexion d'un appareil d'installation électrique, sachant :
qu'il comprend des équerres de raccordement (10.11, 10.12, 10.13, respectivement 10.21, 10.22, 10.23, respectivement 10.31, 10.32, 10.33) réalisées en matériau plat de même section,
que les équerres de raccordement présentent des branches de raccordement (11) pouvant être raccordées avec la barre omnibus (60) et des branches de connexion (13),
**caractérisé en ce**
**que** le jeu de construction comprend des sections de barre plate (20) et des équerres de connexion en forme de Z (30),
**que**, dans la position de montage des jeux d'équerres de raccordement (VW1, VW2, VW3), les branches de raccordement (11) sont posées les unes sur les autres et les branches de connexion (13) présentent entre elles un espacement qui correspond à l'épaisseur du matériau plat et
**que** les équerres de connexion en forme de Z (30) sont pourvues de branches de connexion (31 ou 33) qui, dans la position de montage des jeux d'équerres de connexion (ZW), présentent entre elles un espacement qui correspond à l'épaisseur du matériau plat.

2. Jeu de construction selon la revendication 1,
**caractérisé en ce**
**qu'**il comprend le même nombre d'équerres de raccordement (10), de sections de barre plate (20) et d'équerres de connexion en forme de Z (ZW).

3. Jeu de construction selon la revendication 1 ou 2,
**caractérisé en ce**
**que** les équerres de raccordement (10.11, 10.12, 10.13, respectivement 10.21, 10.22, 10.23, respectivement 10.31, 10.32, 10.33) pour un système de barres omnibus à plusieurs barres omnibus (60) espacées présentent des branches de raccordement (11) de longueur différente, adaptée à l'espacement des barres omnibus (60), avec des perçages de raccordement (12, respectivement 15, respectivement 16) associés aux barres omnibus (60).

4. Jeu de construction selon la revendication 1 ou 2,
**caractérisé en ce**
**que** pour un système de barres omnibus à plusieurs barres omnibus (60) espacées, on utilise pour la connexion de chaque barre omnibus (60) des équerres de raccordement (10.31, 10.32, 10.33) uniformes dont les branches de raccordement (11) s'étendent transversalement sur toutes les barres omnibus (60) et sont pourvues au niveau de chaque barre omnibus (60) de perçages de raccordement (12, 15, 16) associés.

5. Jeu de construction selon l'une des revendications 1 à 4,
**caractérisé en ce**
**que** les branches de connexion (13) des jeux d'équerres de raccordement (VW1, VW2, VW3), des sections de barre plate (20) et les branches de connexion (31, 33) des jeux d'équerres de connexion (ZW) sont pourvues de perçages de fixation (14, 21, 22, 32, 34) coordonnés les uns aux autres.

6. Jeu de construction selon l'une des revendications 1 à 5,
**caractérisé en ce**
**que** les jeux d'équerres de connexion (ZW) présentent des équerres de connexion en forme de Z (30) uniformes dont les branches centrales (35) sont pourvues de logements de raccordement (36) supplémentaires pour la fixation du jeu d'équerres de connexion (ZW) dans la position de montage.

7. Jeu de construction selon l'une des revendications 1 à 6,
**caractérisé en ce**
**qu'**il est prévu pour les espacements non occupés des branches de connexion (13) du jeu d'équerres de connexion (ZW) des plaques de contact (40) dont l'épaisseur correspond à l'épaisseur du matériau plat et qui peuvent être raccordées (41) avec les branches de connexion (par exemple 33).

8. Jeu de construction selon la revendication 4,
**caractérisé en ce**
**que** les branches de raccordement (11) d'un jeu d'équerres de raccordement (VW3) peuvent être raccordées à la barre omnibus (60) associée par l'intermédiaire de pièces isolantes (50) qui reçoivent, seulement au niveau de la barre omnibus associée, une barrette de contact (65) qui établit la liaison électrique entre la barre omnibus (60) et le jeu d'équerres de raccordement (VW3).

9. Jeu de construction selon l'une des revendications 1 à 8,
**caractérisé en ce**
**qu'**il comprend des jeux de barres plates (FS) avec des sections de barre plate (20) de longueur différente.

10. Jeu de construction selon l'une des revendications 1 à 9,
**caractérisé en ce**
**qu'**il comprend des jeux d'équerres de connexion (ZW) avec des équerres de connexion en forme de Z (30) dont les branches centrales (35) présentent des dimensions différentes.
